# FASCICULE DE BREVET EUROPEEN

(11) **EP 4 149 781 B1**
(45) Date de publication et mention de la délivrance du brevet: **15.05.2024**
(21) Numéro de dépôt: 21719622.9
(22) Date de dépôt: 19.04.2021
(51) Int. Cl.: B60K 11/08, B60H 1/00, B60K 11/02

(54) **MODULE DE REFROIDISSEMENT POUR VÉHICULE AUTOMOBILE ÉLECTRIQUE À TURBOMACHINE TANGENTIELLE**
KÜHLMODUL FÜR EIN ELEKTRISCHES KRAFTFAHRZEUG MIT EINER TANGENTIALFLUSSTURBOMASCHINE
COOLING MODULE FOR AN ELECTRIC MOTOR VEHICLE, COMPRISING A TANGENTIAL-FLOW TURBOMACHINE

(30) Priorité: 12.05.2020 FR 2004664
(43) Date de publication de la demande: 22.03.2023
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); DURBECQ, Gael, 78322 Le Mesnil-Saint-Denis Cedex (FR); ETIENNE, Erwan, 78322 Le Mesnil-Saint-Denis Cedex (FR); AZZOUZ, Kamel, 78322 Le Mesnil-Saint-Denis Cedex (FR)
(74) Mandataire: Valeo Systèmes Thermiques
(86) Numéro de dépôt international: PCT/EP2021/060043
(87) Numéro de publication internationale: WO 2021/228494

(56) Documents cités:
- EP-A1- 2 875 979
- WO-A1-2016/117377
- WO-A1-2019/058809
- JP-A- H11 321 347
- US-A- 4 519 343

## Description

L'invention se rapporte à un module de refroidissement pour véhicule automobile, à turbomachine tangentielle. L'invention vise également un véhicule automobile muni d'un tel module de refroidissement.

Les véhicules à moteur, qu'ils soient à combustion ou électriques, ont besoin d'évacuer les calories que génère leur fonctionnement. Pour cette raison, des modules d'échange thermique comprenant un ensemble d'échangeurs de chaleur à l'intérieur desquels est destiné à circuler un fluide caloporteur sont intégrés dans les véhicules automobiles. Ces modules d'échange thermique sont également appelés modules de refroidissement.

Un échangeur de chaleur de véhicule automobile comprend généralement des tubes, dans lesquels le fluide caloporteur est destiné à circuler, notamment un liquide tel que de l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant. Un tel échangeur de chaleur est par exemple un évaporateur, un condensateur, un évapo-condenseur ou encore un radiateur agencé au sein d'un circuit de gestion thermique.

Afin d'augmenter encore l'échange de chaleur entre le fluide caloporteur et l'air ambiant, il est fréquent qu'un dispositif de ventilation soit utilisé en sus, pour générer ou accroître un flux d'air dirigé vers les tubes et les ailettes. Plus particulièrement, un module de refroidissement (ou module d'échange de chaleur) d'un véhicule automobile comporte classiquement au moins un échangeur thermique ou un ensemble d'échangeurs thermiques et un dispositif de ventilation adapté à générer un flux d'air au contact desdits échangeurs thermiques. Un module de refroidissement d'un type connu est divulgué par le document JP H11 321347 A.

Toutefois, le rendement d'un tel module de refroidissement peut être altéré, notamment si les conditions météorologiques lui sont défavorables. De telles conditions sont par exemple des températures basses et/ou un taux d'humidité qui peuvent favoriser la formation de givre sur l'évapo-condenseur du véhicule automobile, ce qui peut limiter la performance du module de refroidissement, notamment lorsque le circuit de gestion thermique est destiné à fonctionner suivant un mode en pompe à chaleur. Ces conditions météorologiques se rencontrent plus particulièrement en période hivernale lorsqu'un utilisateur du véhicule automobile désire généralement réchauffer l'air à l'intérieur de l'habitacle ou bien réchauffer les batteries.

Un objet de la présente invention est de résoudre au moins partiellement un inconvénient de l'état de la technique.

À cet effet, l'invention a pour objet un module de refroidissement comprenant un dispositif de ventilation, notamment pour véhicule automobile, le dispositif de ventilation étant destiné à générer un flux d'air traversant un ensemble d'échangeurs de chaleur comprenant au moins un premier et un deuxième échangeurs thermiques, le premier échangeur thermique étant configuré pour pouvoir absorber de l'énergie calorifique du flux d'air et le deuxième échangeur thermique étant un radiateur, le dispositif de ventilation comprenant au moins une turbomachine tangentielle de mise en mouvement dudit flux d'air par rotation de ladite turbomachine tangentielle, la turbomachine tangentielle étant réversible de sorte à générer, dans un premier sens de rotation, un premier flux d'air traversant successivement le premier puis le deuxième échangeur thermique et, dans un deuxième sens de rotation inverse au premier sens de rotation, un deuxième flux d'air traversant successivement le deuxième puis le premier échangeur thermique.

Grâce aux deux sens de rotation de la turbomachine tangentielle réversible, le dispositif de ventilation permet d'inverser le sens d'écoulement du flux d'air qui traverse le module de refroidissement. Dans un premier sens de rotation, qui correspond à un fonctionnement classique, par exemple en mode pompe à chaleur ou de refroidissement, un premier flux d'air aspiré depuis l'extérieur du véhicule automobile traverse successivement le premier puis le deuxième échangeur thermique. Dans le deuxième sens de rotation, un deuxième flux d'air est entraîné suivant le même trajet, mais en sens inverse, de manière à traverser successivement le deuxième puis le premier échangeur thermique. Cela est particulièrement avantageux afin de réchauffer le deuxième flux d'air de manière à débarrasser le premier échangeur thermique du givre éventuellement présent sur sa surface, par exemple du fait d'une utilisation du circuit de gestion thermique dans un mode pompe à chaleur.

L'invention peut en outre comprendre un ou plusieurs des aspects suivants pris seuls ou en combinaison:
- la turbomachine tangentielle comporte un rotor afin de générer le premier flux d'air ou le deuxième flux d'air selon le sens de rotation;
- le dispositif de ventilation comprend une unité de pilotage configurée pour piloter le sens de rotation dudit rotor;
- le rotor de la turbomachine tangentielle comporte des pales sur sa circonférence
- lesdites pales s'étendent suivant une direction radiale.
- les pales sont articulées à leur extrémité liée à la circonférence du rotor, de manière à être inclinables par rapport à la direction radiale
- l'inclinaison des pales par rapport à la direction radiale est comprise entre - 5° et +5° degrés
- le module de refroidissement comprend un actionneur configuré pour piloter une inclinaison des pales articulées.
- le module de refroidissement comporte une volute formant un guidage d'air autour de la turbomachine tangentielle, la volute étant destinée à être traversé par le flux d'air.
- le module de refroidissement comprend au moins un radiateur à basse température.

En outre, la turbomachine tangentielle permet de créer un flux d'air à travers l'ensemble des échangeurs thermiques avec un bien meilleur rendement que si un ventilateur à hélice était mis en oeuvre. Ainsi, avantageusement, on met en oeuvre au moins une turbomachine tangentielle qui permet d'obtenir des flux d'air mieux répartis sur l'ensemble des échangeurs de forme générale rectangulaire.

D'autres avantages et caractéristiques de l'invention apparaîtront plus clairement à la lecture de la description suivante donnée à titre d'exemple illustratif et non limitatif, et des dessins annexés parmi lesquels :
[Fig.1] La figure 1 représente schématiquement la partie avant d'un véhicule automobile, vu de côté ;
[Fig.2] La figure 2 représente une vue en perspective d'une face avant de véhicule automobile comprenant un exemple d'un mode de réalisation d'un module de refroidissement.
[Fig. 3] La figure 3 représente une vue en coupe du module de refroidissement de la figure 2 traversé par le premier flux d'air.
[Fig. 4] La figure 4 est une vue similaire à la figure 3, mais le module de refroidissement est traversé par le deuxième flux d'air, en sens inverse.
[Fig. 5] La figure 5 est une représentation schématique d'un circuit de gestion thermique du module de refroidissement de la figure 2 selon un mode de fonctionnement en climatisation.
[Fig. 6] La figure 6 représente une vue similaire à la figure 5 selon un mode de fonctionnement en pompe à chaleur.

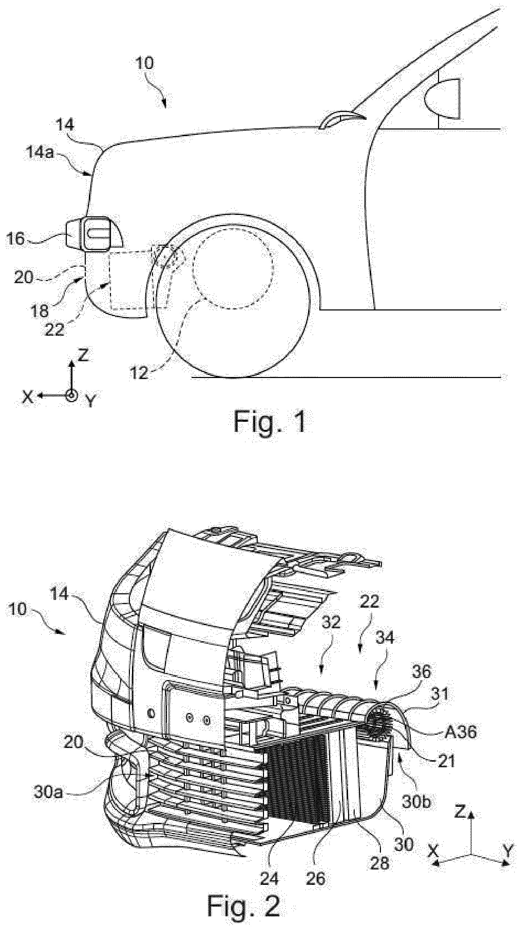

Sur ces figures, les éléments identiques portent les mêmes numéros de référence. Sur les figures 1 à 4, une première direction, notée X, correspond à une direction longitudinale du véhicule. Elle correspond également à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Sur les figures 1 à 4, le module de refroidissement selon la présente invention est illustré dans une position fonctionnelle, c'est-à-dire quand il équipe un véhicule automobile.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

Dans la présente description, on entend par « placé en amont » qu'un élément est placé avant un autre par rapport au sens de circulation d'un flux d'air. A contrario, on entend par « placé en aval » qu'un élément est placé après un autre par rapport au sens de circulation du flux d'air.

La figure 1 illustre de manière schématique la partie avant d'un véhicule automobile 10 à moteur 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 peut être unique comme dans l'exemple illustré. Alternativement cependant, la carrosserie 14 peut définir une pluralité de baies de refroidissement. Ici, la baie de refroidissement 18 se trouve en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

Le module de refroidissement 22 est plus nettement visible sur les figures 2 à 4. Tel qu'illustré, le module de refroidissement 22 comporte essentiellement un boîtier ou cadre 30 formant un canal interne d'air entre deux extrémités 30a, 30b opposées qui forment des ouvertures. Le module de refroidissement 22 comporte également un ensemble d'échangeurs de chaleur 23 disposé au sein du cadre 30 et comportant au moins un premier échangeur thermique 24, tel qu'un évaporateur ou un évapo-condenseur, et un deuxième échangeur thermique 26, tel qu'un radiateur basse température, ainsi qu'un dispositif de ventilation 32. Plus précisément, le cadre 30 peut s'apparenter à un carénage permettant de loger l'ensemble d'échangeurs de chaleur 23 entre les deux extrémités 30a et 30b. L'extrémité 30a est destinée à être disposée en regard de la baie de refroidissement 18 tandis que l'extrémité 30b est orienté vers l'arrière du véhicule automobile. Par ailleurs, le module de refroidissement 22 comporte une volute 31 formant un guidage d'air autour de la turbomachine tangentielle 32. Plus précisément, une partie arrière du cadre 30 forme notamment une volute 31 débouchant au niveau de l'extrémité 30b.

La volute 31 forme par exemple un guidage d'air autour de la turbomachine tangentielle 32 jusqu'à la deuxième extrémité 30b de l'air hors du module 22. Plus particulièrement, le guidage d'air comprend avantageusement une paroi en forme de spirale tronquée. La volute 31 est donc destinée à être traversée par le flux d'air (F1, F2).

Selon un mode de réalisation du module de refroidissement 22 illustré aux figures 2 à 4, l'ensemble d'échangeurs de chaleur 23 comprend un premier échangeur thermique 24, un deuxième échangeur thermique 26 ainsi qu'un troisième échangeur thermique 28 pouvant être lui aussi un radiateur basse température. Ce troisième échangeur thermique 28 est néanmoins optionnel dans la présente invention. Chacun des échangeurs thermiques 24, 26, 28 présente une forme générale parallélépipédique déterminée par une longueur, une épaisseur et une hauteur qui peuvent être identiques d'un échangeur thermique 24, 26, 28 à l'autre ou bien différentes. La longueur s'étend le long de la direction X, l'épaisseur le long de la direction Y et la hauteur dans la direction Z.

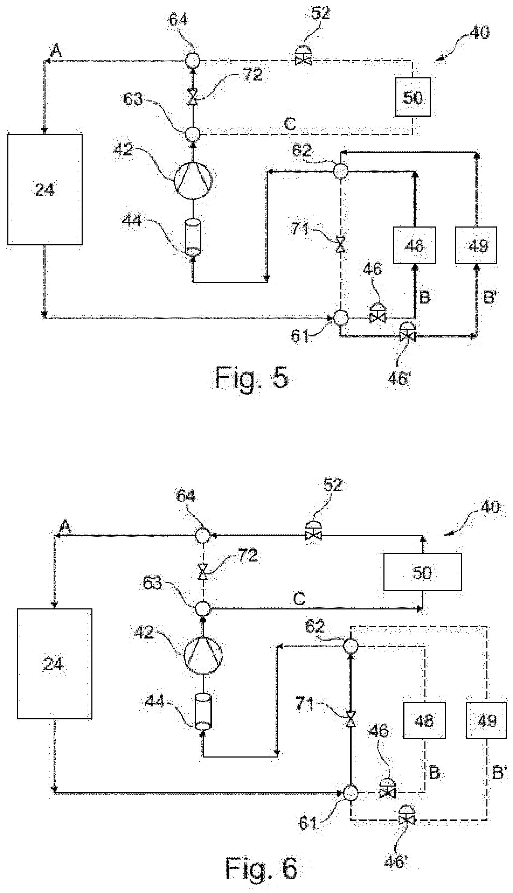

Comme dit plus haut, le premier échangeur thermique 24 peut être un évaporateur ou un évapo-codenseur. On entend par là que le premier échangeur thermique 24 est plus particulièrement configuré pour pouvoir absorber de la chaleur depuis l'air extérieur pour réchauffer le premier flux d'air F1'afin notamment de réchauffer l'habitacle et/ou les batteries. Pour cela, le premier échangeur thermique 24 est connecté à un circuit de gestion thermique 40, par exemple une pompe à chaleur (non représenté) ou un circuit de climatisation inversible (illustré aux figures 5 et 6) apte à fonctionner dans un mode pompe à chaleur. Selon un mode de réalisation du module de refroidissement 22, le premier échangeur thermique 24 est un évapo-condenseur 24, il est ainsi également capable d'évacuer la chaleur par l'intermédiaire du circuit de gestion thermique 40 par exemple pour refroidir l'air de l'habitacle et/ou refroidir les batteries du véhicule lorsque le circuit de gestion thermique 40 fonctionne dans un mode de fonctionnement de refroidissement.

Toujours selon le mode de réalisation illustré aux figures 2 à 4 du module de refroidissement 22, celui-ci comprend au moins un radiateur basse température. Par radiateur, on entend ici un échangeur thermique configuré pour dissiper de la chaleur dans le flux d'air F1, F2. Plus précisément, le deuxième échangeur thermique 26 et l'optionnel troisième échangeur thermique 28 sont plus particulièrement des radiateurs à basse température. L'un des deuxième 26 ou troisième 28 échangeurs thermiques est notamment destiné à refroidir l'électronique de puissance du véhicule automobile tandis que l'autre est destiné à refroidir le moteur électrique de ce même véhicule. Selon un mode de réalisation non illustré, le module de refroidissement 22 peut comporter uniquement le deuxième échangeur thermique 26 comme radiateur basse température.

Par ailleurs, le module de refroidissement 22 comprend un dispositif de ventilation 32 comportant au moins un ventilateur tangentiel 34, ou plus généralement une turbomachine tangentielle 34. La turbomachine tangentielle 34 est configurée pour générer au moins un flux d'air F1, F2 traversant l'ensemble des échangeurs de chaleur 23 entre les deux extrémités 30a et 30b formant des ouvertures du module de refroidissement 22. Autrement dit, les échangeurs thermiques 24, 26, 28 sont disposés dans le canal interne d'air de manière à être traversés par les flux d'air F1 et/ou F2.

La turbomachine tangentielle 34 comprend un rotor 36. Le rotor 36 est par exemple constitué d'une turbine, plus précisément d'une hélice tangentielle ou roue à aubes. La turbine 36 a une forme tubulaire et cylindrique, elle est montée rotative autour d'un axe de rotation A36 associé (Figure 2). Le rotor 36 est entraîné en rotation par un moteur associé (non représenté sur les figures). Sur les Figures 2 à 4, le rotor 36 de la turbomachine tangentielle 34 est disposé latéralement. Cependant, d'autre orientation pour la turbomachine tangentielle 34 au sein du module de refroidissement 22 sont envisageables. Le rotor 36 a par exemple un diamètre extérieur de 80 millimètres et un diamètre intérieur de 70 millimètres.

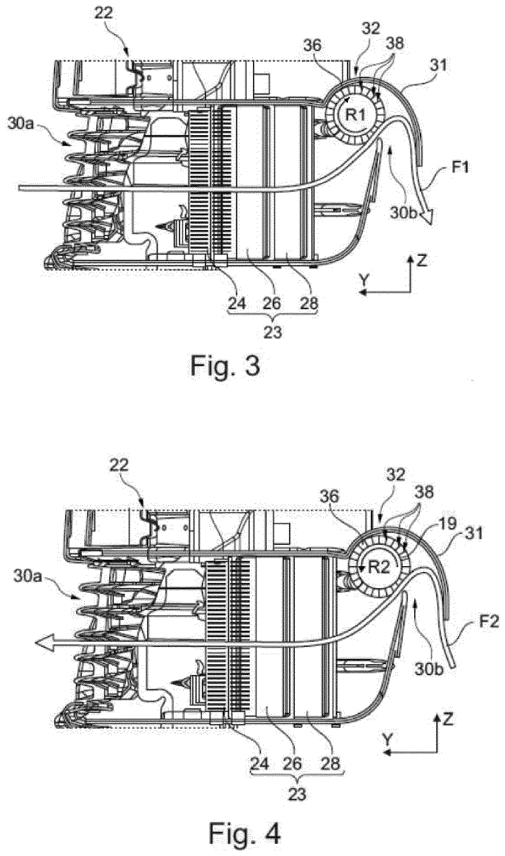

La turbomachine tangentielle 34 dans le dispositif de ventilation 32 est réversible. Par « réversible », on entend que la turbomachine tangentielle 34 est conçu de sorte à générer, dans un premier sens de rotation R1 du rotor 36 (représenté par une flèche blanche sur la Figure 3), un premier flux d'air F1 traversant l'ensemble des échangeurs de chaleur 23 avant d'être expulsé par la deuxième extrémité 30b. Plus particulièrement, l'air est amené à être aspiré par l'extrémité 30a, notamment à travers la grille 20, puis le flux d'air F1 est dirigé dans le module de refroidissement 22 pour traverser successivement le premier échangeur thermique 24, le deuxième échangeur thermique 26 et le troisième deuxième échangeur thermique 28, comme illustré plus particulièrement par la flèche noire sur la Figure 3. Dans le sens de circulation du flux d'air F1, le deuxième échangeur thermique 26 est ainsi disposé en aval du premier échangeur thermique 24. Le troisième échangeur thermique 28 est ici quant à lui disposé en aval du deuxième échangeur thermique 26 dans le sens du flux d'air F1. Il est cependant tout à fait possible d'imaginer que ce troisième échangeur thermique 28 soit disposé en amont du premier échangeur thermique 24.

La turbomachine tangentielle 34 est également configurée pour générer dans un deuxième sens de rotation R2 (représenté par une flèche blanche sur la Figure 4) inverse au premier sens de rotation R1, un deuxième flux d'air F2 représenté par une flèche noire sur la Figure 4. Le deuxième flux d'air F2 est ainsi destiné à être aspiré par l'extrémité 30b et à traverser successivement et dans cet ordre le troisième échangeur thermique 28, le deuxième échangeur thermique 26 et le premier échangeur thermique 24 avant d'être expulsé par l'ouverture 30a. Les flux d'air F1 et F2 parcours donc le même trajet à travers le module de refroidissement 22, mais en sens inverse.

Les flux d'air F1 et F2 générés par une telle turbomachine tangentielle 34 sont donc destinés à suivre une trajectoire entre l'extrémité 30a et l'extrémité 30b en passant à travers l'ensemble des échangeurs de chaleur 23 ainsi que sur toute la largeur du cylindre formé par le rotor 36. La trajectoire du flux d'air F1 ou F2 est « tangentielle » au niveau du rotor 36 dans le sens où le flux d'air F1 ou F2 ne traverse donc pas le rotor 36 comme dans le cas d'un ventilateur à turbine.

Par ailleurs, le dispositif de ventilation 32 comprend une unité de pilotage configurée pour piloter le sens de rotation R1 ou R2 dudit rotor 36. Plus précisément, l'unité de pilotage (non représentée sur les Figures) permet de piloter une mise en mouvement du rotor 36 dans le premier sens de rotation R1, permettant ainsi de puiser de l'air depuis l'extérieur du véhicule automobile et de générer le premier flux d'air F1. Elle peut également permettre un pilotage de la vitesse angulaire de rotation du rotor 36, ou encore un pilotage des phases d'accélération et de décélération du rotor 36 jusqu'à l'arrêt complet de celui-ci. L'unité de pilotage sert également à piloter une mise en mouvement du rotor 36 depuis une position d'arrêt dans un deuxième sens de rotation R2 inverse au premier sens de rotation R1 afin de générer le deuxième flux d'air F2.

Le rotor 36 comporte avantageusement plusieurs rangées de pales 38 (ou aubes). Plus précisément, le rotor 36 du dispositif de ventilation 32 comprend des pales 38 sur sa circonférence intérieure. Le nombre de rangées de pales 38 est par exemple compris entre un et trois. Les pales 38 font par exemple saillie par rapport à la surface interne du rotor 36. Par ailleurs, les pales 38 s'étendent parallèlement à l'axe A36, les pales 38 sont donc parallèles entre elles. Dans une même rangée circonférentielle de pales 38, celles-ci sont notamment réparties avec un écart angulaire constant entre deux pales 38 voisines. Le nombre de pales 38 disposées sur la circonférence du rotor 36 cylindrique est par exemple compris entre vingt et vingt-huit, il est plus précisément égal à vingt-quatre. La hauteur des pales 38 est par exemple de 10 millimètres.

Selon un mode de réalisation du rotor 36, ces pales 38 s'étendent suivant une direction radiale. Cette orientation radiale des pales 38 permet d'équilibrer le débit des flux d'air F1 et F2 généré respectivement pour les deux sens de rotation R1 et R2 envisageables pour le rotor 36. Les pales 38 peuvent être fixes par rapport au rotor 36.

Mais selon un autre mode de réalisation du rotor 36, les pales 38 sont articulées à leur extrémité liée à la circonférence du rotor 36, de manière à être inclinables par rapport à la direction radiale. Il y a par exemple des charnières liées d'une part aux pales 38 et d'autre part à la surface intérieure du rotor 36. Plus précisément, un premier battant de la charnière est solidaire de la surface intérieure du rotor 36 tandis que l'autre battant est solidaire de la pale 38. Les bases des pales 38 sont par exemple vissées au battant de la deuxième charnière. Selon un autre exemple, les bases des pales 38 sont prises en sandwich entre deux éléments pinçant du deuxième battant de la charnière. L'axe des charnières correspond alors à un axe de pivotement des pales 38 auxquelles les charnières sont associées. Les axes de pivotement des pales 38 s'étendent parallèlement à l'axe A36 du cylindre du rotor 36.

Les pales 38 s'apparentent ainsi à des volets orientables dont l'inclinaison par rapport à la direction radiale est par exemple comprise entre -5° et +5° degrés. Plus particulièrement, les pales 38 peuvent être inclinées dans les deux sens par rapport à la direction radiale.

Selon un autre mode de réalisation des pales 38, celles-ci comprennent plusieurs éléments en forme de lamelles interconnectées suivant leur bord long de manière à former une surface articulée, permettant aux pales 38 d'adopter une forme incurvée en ligne brisée en fonction du sens de rotation R1 ou R2 du rotor 36 afin d'augmenter le rendement du dispositif de ventilation 32 (à confirmer par les inventeurs).

Ainsi la forme des pales 38 et leur orientation au sein du rotor 36 de la turbomachine tangentielle 34 dans le dispositif de ventilation 32 permettent également de contribuer à l'augmentation des échanges de chaleur entre les flux d'air F1 et/ou F2 et le fluide caloporteur destiné à circuler dans les échangeurs thermiques 24, 26, 28.

Afin d'orienter les pales 38 au sein du rotor 36, le module de refroidissement 22 et plus particulièrement le dispositif de ventilation 34 peut comprendre un actionneur (non représentée sur les Figures) configuré pour piloter l'inclinaison des pales 38 articulées. Cet actionneur permet notamment de synchroniser l'inclinaison des pales 38 articulées pour qu'elles soient toutes simultanément orientées de la même manière. Cependant, il est également envisageable de configurer cet actionneur de sorte qu'il oriente les pales 38 indépendamment les unes des autres.

Selon un mode de réalisation du dispositif de ventilation 32, l'actionneur chargé du pilotage de l'inclinaison des pales 38 et l'unité de pilotage peuvent être regroupés en une même unité de contrôle configurée pour assurer d'une part la fonction de réversibilité de la turbomachine tangentielle 34 et d'autre part piloter l'inclinaison des pales 38 articulées.

Le circuit de gestion thermique 40 du module de refroidissement 22 est plus particulièrement représenté sur les figures 5 et 6. Le circuit de gestion thermique 40 est ici un circuit de climatisation inversible dans lequel est destiné à circuler un fluide réfrigérant. Le circuit de gestion thermique 40 comprend le premier échangeur thermique 24 qui est destiné à être traversé par un flux d'air externe, un compresseur 42, un accumulateur 44 qui peut également être appelé « séparateur », un premier détendeur 46, un évaporateur 48 destiné à être traversé par un flux d'air interne lors du fonctionnement en mode climatisation (comme illustré sur la Figure 5) et un condenseur 50 traversé par un flux d'air interne lors du fonctionnement en mode pompe à chaleur (comme illustré sur la Figure 6) ainsi qu'un deuxième détendeur 52.

Par « externe », nous entendons que le flux d'air traversant l'échangeur de chaleur concerné trouve son origine à l'extérieur du véhicule. Par « interne », nous entendons que le flux d'air traversant l'échangeur de chaleur concerné trouve son origine à l'intérieur du véhicule, par exemple au niveau de l'habitacle.

Sur les Figures 5 et 6, le circuit de gestion thermique 40 est notamment divisé en une branche principale A sur laquelle sont connectées des branches de dérivation B, B' et C. Le choix de cette branche principale A est un choix arbitraire utilisé afin de faciliter la compréhension des différents branchements et de la position des différents éléments les uns par rapport aux autres.

Plus particulièrement, le circuit de gestion thermique 40 comprend une autre branche de dérivation B' disposée en parallèle de la branche de dérivation B. La branche de dérivation B' comporte notamment un autre détendeur 46' et un autre échangeur de chaleur 49 qui est notamment dédié au refroidissement des batteries du véhicule automobile électrique.

Les branches de dérivation B et B' sont destinées à être traversées par le fluide réfrigérant lorsque le circuit de gestion thermique 40 fonctionne dans le mode « climatisation », comme illustré plus particulièrement sur la Figure 5. Dans ce mode particulier, le premier échangeur thermique 24 joue le rôle d'un condenseur en évacuant la chaleur du circuit de gestion thermique 40 vers l'extérieur. Le fluide réfrigérant circule dans ce cas dans la branche principale A et dans les branches de dérivation B et B' dans le sens des flèches indiquées sur la Figure 5.

La branche de dérivation C est destinée à être traversée par le fluide réfrigérant lorsque le circuit de gestion thermique 40 fonctionne dans le mode « pompe à chaleur », comme illustré plus particulièrement sur la Figure 6. Dans ce mode particulier, le premier échangeur thermique 24 joue le rôle d'un évaporateur en absorbant la chaleur depuis l'extérieur. Le fluide réfrigérant circule dans ce cas dans la branche principale A et dans la branche de dérivation C dans le sens des flèches indiquées sur la Figure 6.

La branche principale A comporte dans le sens de circulation du fluide réfrigérant le premier échangeur thermique 24 et un compresseur 42. Optionnellement, un accumulateur 44 peut se situer en amont du compresseur 42 pour séparer l'huile du fluide circulant au sein du circuit de gestion thermique 40. La branche de dérivation B comporte le premier détendeur thermostatique 46 en amont de l'évaporateur 48 et la branche de dérivation C comporte le condenseur 50 en amont du deuxième détendeur thermostatique 52.

Les branches de dérivation B, B' et C sont raccordées à la branche principale A par des points de raccordements 61, 62, 63 et 64. Plus précisément, les branches de dérivation B et B' sont raccordées à la branche principale A par les points de raccordements 61 et 62 qui se situent respectivement en amont et en aval de l'évaporateur 48 tandis que la branche de dérivation C est raccordée à la branche principale A par les points de raccordements 63 et 64 qui se situent respectivement en amont et en aval du condenseur 50.

Le premier point de raccordement 61 est disposé en amont du premier détendeur thermostatique 46, entre le premier échangeur thermique 24 et ledit premier détendeur thermostatique 46. Le deuxième point de raccordement 62 est disposé en aval de l'évaporateur 48 et en amont du compresseur 42. Le troisième point de raccordement 63 est disposé entre le compresseur 42 et le condenseur 50. Le quatrième point de raccordement 64 est disposé en aval du deuxième détendeur thermostatique 52 et en amont du premier échangeur thermique 24.

Par ailleurs, une vanne 71 est disposée sur une liaison fluidique directe entre le premier point de raccordement 61 et le deuxième point de raccordement 62. De manière similaire, une vanne 72 est disposée sur une liaison fluidique directe entre le troisième point de raccordement 63 et le quatrième point de raccordement 64. Lorsque le circuit de gestion thermique 40 fonctionne suivant un mode climatisation (Figure 5), la vanne 71 est fermée tandis que la vanne 72 est ouverte. Lorsque le circuit de gestion thermique 40 fonctionne suivant un mode en pompe à chaleur (Figure 6), la vanne 71 est ouverte tandis que la vanne 72 est fermée.

Dans le cas où la température extérieure du véhicule est particulièrement basse, par exemple dans le cas où elle est comprise entre -20°C et 0°C, l'utilisation du premier échangeur thermique 24 afin d'absorber de la chaleur peut conduire à la formation de givre sur le premier échangeur thermique 24 disposé à proximité de l'extrémité 30a du module de refroidissement 22 à l'avant du véhicule automobile. Ce givre peut fortement réduire les performances du module de refroidissement 22 et notamment du premier échangeur thermique 24.

Tel qu'il est conçu, il est possible d'inverser le sens de circulation du flux d'air traversant le module de refroidissement 22 pour procéder au dégivrage du premier échangeur thermique 24. La réversibilité de la turbomachine tangentielle 34 permet de générer un flux d'air F2 dans le cas où le rotor 36 est entraîné dans le sens de rotation R2, comme représenté sur la Figure 4. Dans ce cas particulier, le flux d'air F2 traverse alors au moins le deuxième échangeur thermique 26 afin d'être réchauffé et ensuite le premier échangeur thermique 24. Au cours de ce trajet en sens inverse, le flux d'air F2 subit une augmentation de sa température au niveau du deuxième échangeur thermique 26, et éventuellement au niveau du troisième échangeur thermique 28, afin de faire fondre le givre au niveau du premier échangeur thermique 24. Ce fonctionnement de dégivrage avec l'inversion du flux d'air est notamment utilisé de façon brève, par exemple de l'ordre de 10 à 15 minutes afin de limiter les pertes de conforts pour les occupants de l'habitacle.

L'invention ne se limite pas au seul exemple décrit ci-avant. Au contraire, l'invention est susceptible de nombreuses variantes accessibles à l'homme de l'art, en restant dans le cadre de l'invention tel que défini par les revendications.

## Revendications

1. Module de refroidissement (22) comprenant un dispositif de ventilation (32), notamment pour véhicule automobile, le dispositif de ventilation (32) étant destiné à générer un flux d'air (F1, F2) traversant un ensemble d'échangeurs de chaleur (23) comprenant au moins un premier (24) et un deuxième (26) échangeurs thermiques, le premier échangeur thermique (24) étant configuré pour pouvoir absorber de l'énergie calorifique du flux d'air (F1, F2) et le deuxième échangeur thermique (26) étant un radiateur, le dispositif de ventilation (32) comprenant au moins une turbomachine tangentielle (34) de mise en mouvement dudit flux d'air (F1, F2) par rotation de ladite turbomachine tangentielle (34), le module de refroidissement (22) étant **caractérisé en ce que** :
la turbomachine tangentielle (34) est réversible de sorte à générer, dans un premier sens de rotation (R1), un premier flux d'air (F1) traversant successivement le premier (24) puis le deuxième (26) échangeur thermique et, dans un deuxième sens de rotation (R2) inverse au premier sens de rotation (R1), un deuxième flux d'air (F2) traversant successivement le deuxième (26) puis le premier (24) échangeur thermique.

2. Module de refroidissement (22) selon la revendication 1, **caractérisé en ce que** la turbomachine tangentielle (34) comporte un rotor (36) afin de générer le premier flux d'air (F1) ou le deuxième flux d'air (F2) selon le sens de rotation (R1, R2) et **en ce que** le dispositif de ventilation (32) comprend une unité de pilotage configurée pour piloter le sens de rotation (R1, R2) dudit rotor (36).

3. Module de refroidissement (22) selon la revendication précédente, **caractérisée en ce que** le rotor (36) de la turbomachine tangentielle (34) comporte des pales (38) sur sa circonférence et **en ce que** lesdites pales (38) s'étendent suivant une direction radiale.

4. Module de refroidissement (22) selon la revendication précédente, **caractérisé en ce que** les pales (38) sont articulées à leur extrémité liée à la circonférence du rotor (36), de manière à être inclinables par rapport à la direction radiale.

5. Module de refroidissement (22) selon la revendication précédente, **caractérisée en ce que** l'inclinaison des pales (38) par rapport à la direction radiale est comprise entre -5° et +5° degrés.

6. Module de refroidissement (22) selon l'une quelconque des revendications 4 à 5, **caractérisé en ce qu'**il comprend un actionneur configuré pour piloter une inclinaison des pales (38) articulées.

7. Module de refroidissement (22) selon l'une quelconque des revendications précédentes, **caractérisée en ce qu'**il comporte une volute (31) formant un guidage d'air autour de la turbomachine tangentielle (32), la volute (31) étant destinée à être traversé par le flux d'air (F1, F2).

8. Module de refroidissement (1) selon l'une quelconque des revendications précédentes, **caractérisé en ce qu'**il comprend au moins un radiateur à basse température (26, 28).

## Patentansprüche

1. Kühlmodul (22), das eine Belüftungsvorrichtung (32) beinhaltet, insbesondere für ein Kraftfahrzeug, wobei die Belüftungsvorrichtung (32) dazu bestimmt ist, einen Luftstrom (F1, F2) zu erzeugen, der durch einen Satz Wärmetauscher (23) hindurchgeht, welcher mindestens einen ersten (24) und einen zweiten (26) Wärmetauscher beinhaltet, wobei der erste Wärmetauscher (24) dazu konfiguriert ist, Wärmeenergie des Luftstroms (F1, F2) absorbieren zu können, und der zweite Wärmetauscher (26) ein Radiator ist, wobei die Belüftungsvorrichtung (32) mindestens eine Tangentialflussturbomaschine (34) beinhaltet, um den Luftstrom (F1, F2) durch Drehen der Tangentialflussturbomaschine (34) in Bewegung zu versetzen,
wobei das Kühlmodul (22) **dadurch gekennzeichnet ist, dass**:
die Tangentialflussturbomaschine (34) reversibel ist, um in einer ersten Drehrichtung (R1) einen ersten Luftstrom (F1), der nacheinander durch den ersten (24) und dann den zweiten (26) Wärmetauscher hindurchgeht, und in einer zweiten Drehrichtung (R2), die zu der ersten Drehrichtung (R1) entgegengesetzt ist, einen zweiten Luftstrom (F2), der nacheinander durch den zweiten (26) und dann den ersten (24) Wärmetauscher hindurchgeht, zu erzeugen.

2. Kühlmodul (22) nach Anspruch 1, **dadurch gekennzeichnet, dass** die Tangentialflussturbomaschine (34) einen Rotor (36) umfasst, um den ersten Luftstrom (F1) oder den zweiten Luftstrom (F2) gemäß der Drehrichtung (R1, R2) zu erzeugen, und dass die Belüftungsvorrichtung (32) eine Steuereinheit beinhaltet, die dazu konfiguriert ist, die Drehrichtung (R1, R2) des Rotors (36) zu steuern.

3. Kühlelement (22) nach dem vorhergehenden Anspruch, **dadurch gekennzeichnet, dass** der Rotor (36) der Tangentialflussturbomaschine (34) Flügel (38) an seinem Umfang umfasst und dass sich die Flügel (38) gemäß einer radialen Richtung erstrecken.

4. Kühlmodul (22) nach dem vorhergehenden Anspruch, **dadurch gekennzeichnet, dass** die Flügel (38) an ihrem Ende, das mit dem Umfang des Rotors (36) verbunden ist, gelenkig verbunden sind, sodass sie mit Bezug auf die radiale Richtung neigbar sind.

5. Kühlmodul (22) nach dem vorhergehenden Anspruch, **dadurch gekennzeichnet, dass** die Neigung der Flügel (38) mit Bezug auf die radiale Richtung zwischen -5° und +5° Grad liegt.

6. Kühlmodul (22) nach einem beliebigen der Ansprüche 4 bis 5, **dadurch gekennzeichnet, dass** es ein Betätigungselement beinhaltet, das dazu konfiguriert ist, eine Neigung der gelenkig verbundenen Flügel (38) zu steuern.

7. Kühlmodul (22) nach einem beliebigen der vorhergehenden Ansprüche, **dadurch gekennzeichnet, dass** es ein Spiralgehäuse (31) umfasst, das eine Luftführung um die Tangentialflussturbomaschine (32) herum bildet, wobei das Spiralgehäuse (31) dazu bestimmt ist, von dem Luftstrom (F1, F2) durchquert zu werden.

8. Kühlmodul (1) nach einem beliebigen der vorhergehenden Ansprüche, **dadurch gekennzeichnet, dass** es mindestens einen Niedertemperaturradiator (26, 28) beinhaltet.

## Claims

1. Cooling module (22) comprising a ventilation device (32), in particular for a motor vehicle, the ventilation device (32) being intended to generate an air flow (F1, F2) passing through a set of heat exchangers (23) comprising at least one first (24) and one second (26) heat exchanger, the first heat exchanger (24) being configured to be able to absorb heat energy from the air flow (F1, F2) and the second heat exchanger (26) being a radiator, the ventilation device (32) comprising at least one tangential-flow turbomachine (34) for moving said air flow (F1, F2) by rotation of said tangential-flow turbomachine (34),
the cooling module (22) being **characterized in that**:
the tangential-flow turbomachine (34) is reversible so as to generate, in a first direction of rotation (R1), a first air flow (F1) passing successively through the first (24) and then the second (26) heat exchanger and, in a second direction of rotation (R2) that is opposite to the first direction of rotation (R1), a second air flow (F2) passing successively through the second (26) and then the first (24) heat exchanger.

2. Cooling module (22) according to Claim 1, **characterized in that** the tangential-flow turbomachine (34) has a rotor (36) in order to generate the first air flow (F1) or the second air flow (F2) depending on the direction of rotation (R1, R2) and **in that** the ventilation device (32) comprises a control unit configured to control the direction of rotation (R1, R2) of said rotor (36).

3. Cooling module (22) according to the preceding claim, **characterized in that** the rotor (36) of the tangential-flow turbomachine (34) has blades (38) on its circumference and **in that** said blades (38) extend in a radial direction.

4. Cooling module (22) according to the preceding claim, **characterized in that** the blades (38) are articulated at their end connected to the circumference of the rotor (36), so as to be inclinable with respect to the radial direction.

5. Cooling module (22) according to the preceding claim, **characterized in that** the inclination of the blades (38) with respect to the radial direction is between -5° and +5° degrees.

6. Cooling module (22) according to either one of Claims 4 and 5, **characterized in that** it comprises an actuator configured to control an inclination of the articulated blades (38).

7. Cooling module (22) according to any one of the preceding claims, **characterized in that** it has a volute (31) forming a guide for air around the tangential-flow turbomachine (32), the volute (31) being intended to be passed through by the air flow (F1, F2).

8. Cooling module (1) according to any one of the preceding claims, **characterized in that** it comprises at least one low-temperature radiator (26, 28).
